# EUROPÄISCHE PATENTANMELDUNG

(11) **EP 4 382 005 A1**
(43) Veröffentlichungstag der Anmeldung: **12.06.2024**
(21) Anmeldenummer: 22211425.8
(22) Anmeldetag: 05.12.2022
(51) Int. Cl.: A47J 27/00, A47J 43/07, A47J 36/32

(54) **KÜCHENMASCHINE ZUM ZUBEREITEN EINER SPEISE UND VERFAHREN**

(71) Anmelder: Vorwerk & Co. Interholding GmbH, 42270 Wuppertal (DE)
(72) Erfinder: TIETZ, Sebastian, 51379 Leverkusen (DE); DÖRNER, Maria, 50764 Köln (DE); STOLZE, Svenja, 41517 Grevenbroich (DE); REIß, Simon, 51688 Wipperfürth (DE); KRAUT-REINKOBER, Stefan, 51375 Leverkusen (DE); WEBER, Klaus-Martin, 42109 Wuppertal (DE)
(74) Vertreter: Gille Hrabal Partnerschaftsgesellschaft mbB Patentanwälte

(57) **Zusammenfassung**

Die Offenbarung betrifft eine Küchenmaschine 1 mit einem Speisenzubereitungsgefäß 2, einem Heizelement 3 zum Erhitzen einer Speise 4 in dem Speisenzubereitungsgefäß 2, einem Werkzeug 5 zum Mischen und/oder Zerkleinern einer Speise 4 in dem Speisenzubereitungsgefäß 2 und einem Elektromotor 8 zum Rotieren des Werkzeugs 5, wobei eine Steuerungseinrichtung 6 der Küchenmaschine 1 vorgesehen ist, die Zugriff auf ein elektronisch gespeichertes Rezept 10 mit mehreren Rezeptschritten 11 für ein teilautomatisiertes Zubereiten einer Speise mit der Küchenmaschine 1 hat, so dass die Steuerungseinrichtung 6 durch einen Rezeptschritt 11 der mehreren Rezeptschritte 11 des Rezeptes 10 veranlasst werden kann, das Werkzeug 5 und/oder das Heizelement 3 in einer durch den Rezeptschritt 11 definierten Weise zu betreiben, wobei die Küchenmaschine 1 ein Vorgeben einer Soll-Temperatur Tₛ für das Erhitzen der Speise 4 in dem Speisenzubereitungsgefäß 2 durch ein Rezept 10, einen Rezeptschritt 11 und/oder einen Benutzer erlaubt, wobei die Küchenmaschine 1 ferner einen Temperatursensor 7 zum Ermitteln einer Ist-Temperatur Tₗ für ein Vergleichen mit der Soll-Temperatur Tₛ umfasst, dadurch gekennzeichnet, dass die Steuerungseinrichtung 6 so konfiguriert ist, dass ein Erhitzungsvorgang einer Speise 4 in dem Speisenzubereitungsgefäß 2 durch das Heizelement 3 auf die vorgegebene Soll-Temperatur Tₛ in Abhängigkeit von einem oder mehreren Parametern 9 zum Beschreiben eines Zustands der Speise 4 oder der Küchenmaschine 1 erfolgt, so dass ein Wärmeübergang in die Speise, charakterisierbar durch eine Speisenanbrennneigung, berücksichtigt werden kann. Eine höhere Speisenqualität oder Zubereitungszeit können so erzielt werden. Die Offenbarung umfasst ferner ein Verfahren und ein Computerprogramm.

## Beschreibung

Die Erfindung betrifft eine Küchenmaschine mit einem Speisenzubereitungsgefäß, einem Heizelement zum Erhitzen einer Speise in dem Speisenzubereitungsgefäß, einem Werkzeug zum Mischen und/oder Zerkleinern einer Speise in dem Speisenzubereitungsgefäß und einem Elektromotor zum Rotieren des Werkzeugs. Eine Steuerungseinrichtung der Küchenmaschine ist vorgesehen, die Zugriff auf ein elektronisch gespeichertes Rezept mit mehreren Rezeptschritten für ein teilautomatisiertes Zubereiten einer Speise mit der Küchenmaschine hat, so dass die Steuerungseinrichtung durch einen Rezeptschritt der mehreren Rezeptschritte des Rezeptes veranlasst werden kann, das Werkzeug und/oder das Heizelement in einer durch den Rezeptschritt definierten Weise zu betreiben. Die Küchenmaschine erlaubt ein Vorgeben einer Soll-Temperatur für das Erhitzen der Speise in dem Speisenzubereitungsgefäß durch ein Rezept, einen Rezeptschritt und/oder einen Benutzer. Die Küchenmaschine umfasst ferner einen Temperatursensor zum Ermitteln einer Ist-Temperatur für ein Vergleichen mit der Soll-Temperatur.

Die Temperaturregelung der Steuerungseinrichtung einer Küchenmaschine ist üblicherweise so ausgelegt, dass alle möglichen, unterschiedlichen Lebensmittel im Speisenzubereitungsgefäß durch eine einheitliche Temperaturregelung auf eine gewünschte Temperatur erhitzt werden können. Trotz der Vielfalt der Speisen und verarbeitbaren Lebensmitteln wird normalerweise ein ordnungsgemäßes Kochergebnis erzielt. Weil sich seit einigen Jahren das teilautomatisierte Zubereiten von Speisen mithilfe entsprechender Küchenmaschinen auf Basis von elektronisch gespeicherten Rezepten großer Beliebtheit erfreut und die Benutzeranforderungen hinsichtlich der Zubereitungszeiten und Qualität der zubereiteten Speisen stetig steigen, besteht ein fortwährender Bedarf nach weiterführenden Optimierungen.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Küchenmaschine nebst Verfahren bereitzustellen.

Zur Lösung der Aufgabe dienen ein Küchenmaschine gemäß dem Anspruch 1 sowie ein Verfahren und ein Computerprogrammprodukt gemäß den Nebenansprüchen. Vorteilhafte Ausführungsformen ergeben sich aus den Unteransprüchen.

Zur Lösung der Aufgabe dient eine Küchenmaschine mit einem Speisenzubereitungsgefäß, einem Heizelement zum Erhitzen einer Speise in dem Speisenzubereitungsgefäß, insbesondere einem Werkzeug zum Mischen und/oder Zerkleinern einer Speise in dem Speisenzubereitungsgefäß und einem Elektromotor zum Rotieren des Werkzeugs. Eine Steuerungseinrichtung der Küchenmaschine ist vorgesehen, die Zugriff auf ein elektronisch gespeichertes Rezept mit mehreren Rezeptschritten für ein teilautomatisiertes Zubereiten einer Speise mit der Küchenmaschine hat, so dass die Steuerungseinrichtung durch einen Rezeptschritt der mehreren Rezeptschritte des Rezeptes veranlasst werden kann, das Werkzeug und/oder das Heizelement in einer durch den Rezeptschritt definierten Weise zu betreiben. Die Küchenmaschine erlaubt ein Vorgeben einer Soll-Temperatur für das Erhitzen der Speise in dem Speisenzubereitungsgefäß durch ein Rezept, einen Rezeptschritt und/oder einen Benutzer. Die Küchenmaschine umfasst ferner einen Temperatursensor zum Ermitteln einer Ist-Temperatur für ein Vergleichen mit der Soll-Temperatur.

Die Steuerungseinrichtung ist so konfiguriert, dass ein Erhitzungsvorgang einer Speise in dem Speisenzubereitungsgefäß durch das Heizelement auf die vorgegebene Soll-Temperatur in Abhängigkeit von einem oder mehreren Parametern zum Beschreiben eines Zustands der Speise oder der Küchenmaschine erfolgt, insbesondere so dass ein Wärmeübergang in die Speise berücksichtigt werden kann. Insbesondere ist der Wärmeübergang in die Speise charakterisierbar durch eine Speisenanbrennneigung.

Eine höhere Speisenqualität oder Zubereitungszeit können so erzielt werden. Dadurch, dass der Erhitzungsvorgang in Abhängigkeit von einem oder mehreren Parametern zum Beschreiben eines Zustands der Speise oder der Küchenmaschine erfolgt, hat der Speisenzustand und/oder der Zustand der Küchenmaschine (also des Kochprozesses wie z.B. Werkzeugdrehzahl oder Werkzeugart) einen direkten Einfluss auf das Regelverhalten. Das Regelverhalten ist nicht wie üblich einheitlich und fest implementiert, um für alle Anwendungsfälle zu passen. Die Logik ist also gewissermaßen umgedreht. Mit anderen Worten ist das Regelverhalten adaptiv.

Eine Steuerungseinrichtung, die so konfiguriert ist, dass ein Erhitzungsvorgang einer Speise in dem Speisenzubereitungsgefäß durch das Heizelement auf die vorgegebene Soll-Temperatur in Abhängigkeit von einem oder mehreren Parametern zum Beschreiben eines Zustands der Speise oder der Küchenmaschine erfolgt, verfügt über ein variable Temperaturregelung (also eine Temperaturregelungseinheit), dessen Regelverhalten nicht fest, sondern veränderbar ist. Die Temperaturregelung wird für jeden Erhitzungsvorgang individuell durch den Parameter oder die Parameter verändert, um ein angepasstes Regelverhalten zu erzielen. Zum Beschreiben eines Zustands der Küchenmaschine kann ein Parameter Sensordaten oder Informationen aus dem Betrieb der Küchenmaschine beinhalten.

Die Temperaturregelung vergleicht die Soll-Temperatur mit der Ist-Temperatur, um daraus eine Temperatur-Abweichung zu ermitteln. Die Temperaturregelung ermittelt auf Basis der Temperatur-Abweichung und dem mindestens einen Parameter, mit wie viel elektrischer Energie das Heizelement durch die Steuerungseinrichtung der Küchenmaschine zu versorgen ist, um das gewünschte Regelverhalten für den Erhitzungsvorgang auf die Soll-Temperatur zu erreichen. Wenn die Soll-Temperatur erreicht ist und der Ist-Temperatur entspricht, sorgt die Temperaturregelung dafür, dass die Ist-Temperatur auch weiterhin auf der Höhe der Soll-Temperatur bleibt, und wirkt wie oben beschrieben auf das Heizelement ein, wenn es zu Abweichungen der Ist-Temperatur von der Soll-Temperatur kommt. Die Temperaturregelung unterscheidet sich folglich von einer Temperatursteuerung, die keinen Soll-Ist-Vergleich durchführt und keinen Regelkreis (engl. control loops) hat. Es wird darauf hingewiesen, dass der Name "Steuerungseinrichtung" der Küchenmaschine trotz der Wortkomponente "Steuerung" in dieser Offenbarung lediglich als ein System der Küchenmaschine zum Betreiben der Küchenmaschine zu verstehen ist, so dass die Steuerungseinrichtung sowohl Einheiten zum Regeln als auch Einheiten zum Steuern umfassen kann.

Die Temperaturregelung nutzt insbesondere die Ist-Temperatur, die mithilfe des Temperatursensors ermittelt wird, als sogenannte Regelgröße. Die Temperaturregelung nutzt insbesondere die Soll-Temperatur, die durch ein Rezept, einen Rezeptschritt und/oder einen Benutzer vorgegeben wird, als sogenannte als Führungsgröße. Vorzugsweise sind der Temperatursensor und/oder das Heizelement an einer Unterseite eines Bodens des Speisenzubereitungsgefäßes angeordnet. Wenn der Temperatursensor keinen direkten Kontakt mit der Speise hat, entspricht die gemessene Ist-Temperatur nicht unmittelbar der Temperatur der Speise, sondern der Temperatur an der Stelle, z.B. an der Unterseite des Bodes des Speisenzubereitungsgefäßes, wo sich der Temperatursensor befindet. Insbesondere geben der Benutzer, das Rezept und/oder ein Rezeptschritt eine Soll-Temperatur der Speise vor, z.B. 30°C, 50°C oder 100°C. Für das Vergleichen der Ist-Temperatur mit der Soll-Temperatur werden die Ist-Temperatur und/oder die Soll-Temperatur entsprechend angepasst (z.B. gemäß hinterlegten Daten korrigiert), so dass die vom Benutzer, Rezept oder Rezeptschritt gewünschte Temperatur der Speise vorliegt, wenn die Ist-Temperatur gleich der Soll-Temperatur ist. Merkmale des Anspruchs 1 wie "Ist-Temperatur (T_{I}) für ein Vergleichen mit der Soll-Temperatur (Ts)" oder "ein Erhitzungsvorgang einer Speise in dem Speisenzubereitungsgefäß durch das Heizelement auf die vorgegebene Soll-Temperatur (Ts)" sind entsprechend zu verstehen.

Die Temperaturregelung verfügt insbesondere über eine Regelungsprozesseinheit. Die Regelungsprozesseinheit hat maßgeblich Einfluss auf das Regelverhalten. Die Temperatur-Abweichung ist insbesondere eine Eingangsgröße für die Regelungsprozesseinheit. Der Parameter oder die mehreren Parameter stellen ebenfalls eine weitere Eingangsgröße bzw. weitere Eingangsgrößen für die Regelungsprozesseinheit dar. Die Regelungsprozesseinheit gibt eine Ausgangsgröße aus. Die Ausgangsgröße wird insbesondere zum Ansteuern des Heizelements verwendet. Vorzugsweise beinhaltet die Ausgangsgröße eine elektrische Leistung oder eine Stromstärke, mit der das Heizelement elektrisch zu versorgen ist. Insbesondere Veranlasst die Steuerungseinrichtung der Küchenmaschine das Ansteuern des Heizelements und/oder Versorgen des Heizelements mit elektrischer Energie gemäß der Ausgangsgröße der Temperaturregelung, insbesondere der Regelungsprozesseinheit der Temperaturregelung.

Die Regelungsprozesseinheit ist so konfiguriert (insbesondere unter Zugriff auf hinterlegte Daten und/oder Regelungsalgorithmen), dass anhand der Temperatur-Abweichung zwischen der Soll-Temperatur und der Ist-Temperatur und dem Parameter bzw. den mehreren Parametern die Ausgangsgröße ermittelt wird, so dass ein an den Parameter oder die Parameter angepasstes Regelverhalten der Temperatur der Speise im Speisenzubereitungsgefäß erzielt wird.

Bei temperatursensiblen Lebensmitteln oder Lebensmitteln, die schneller zum Anbraten neigen, kann in einer Ausgestaltung anhand des mindestens einen Parameters das Regelverhalten so angepasst werden, dass ein Erhitzungsvorgang beispielsweise langsamer und hinsichtlich den vorherrschenden Temperaturen präziser erfolgt, z.B. unter Vermeidung von Ist-Temperaturen über der Soll-Temperatur (Überschwinger). Bei temperaturrobusten Lebensmitteln kann in einer Ausgestaltung hingegen der Erhitzungsvorgang beispielsweise beschleunigt werden, wobei zeitweise Ist-Temperaturen oberhalb der Soll-Temperatur (Überschwinger bzw. Überschwingverhalten) toleriert werden. In einer Ausgestaltung kann das Regelverhalten vorgegebene Temperaturobergrenzen einhalten. Es ist ebenfalls in einer Ausgestaltung möglich, eine vorgegebene, zeitaufgelöste Soll-Temperaturkurve durch das Regelverhalten präzise abzubilden.

Bei einem teilautomatisierten Zubereiten einer Speise mit der Küchenmaschine wird der Benutzer für mindestens eine manuelle Aktion bezüglich des Lebensmittels (z.B. gemäß Anleitung durch die Küchenmaschine ein Lebensmittel vorzerkleinern, in das Speisenzubereitungsgefäß geben und/oder abwiegen) und/oder der Küchenmaschine (z.B. an der Küchenmaschine zwischen zwei Rezeptschritten jeweils eine Freigabe zum Fortsetzen durch Betätigen der Benutzerschnittstelle erteilen und/oder eine Drehzahl gemäß der Anleitung durch die Küchenmaschine einstellen) vorzugsweise für jeden Rezeptschritt benötigt.

In einer Ausführungsform wird der Parameter oder mindestens ein Parameter der mehreren Parameter durch ein Rezept oder einen Rezeptschritt der mehreren Rezeptschritte vorgegeben. Eine besonders hohe Speisenqualität oder besonders kurze Zubereitungszeit können so erzielt werden. Da in dem Rezept oder Rezeptschritt das Lebensmittel oder die zu erhitzenden Lebensmittel sowie Informationen zum Zubereitungsvorgang (z.B. bezüglich des Einsatzes des Werkzeugs zum Mischen und/oder Zerkleinern) enthalten sind, können in dem Rezept oder Rezeptschritt zusätzlich ein oder mehrere Parameter definiert werden, um nach Übergabe an die Steuerungseinrichtung für den Erhitzungsvorgang berücksichtigt zu werden. Ein verbessertes Regelverhalten zum Erzielen einer höheren Speisenqualität oder reduzierter Erhitzungsdauer kann ermöglichst werden. Insbesondere wird ein im Rezept oder Rezeptschritt enthaltener Parameter zusätzlich zum normalen Rezept oder Rezeptschritt im Hinblick auf dessen Übergabe an die Steuerungseinrichtung und zur Berücksichtigung für die Temperaturregelung im Rezept oder Rezeptschritt hinterlegt bzw. gespeichert. In einer Ausgestaltung nutzt die Steuerungseinrichtung bestehende Inhalte eines Rezepts oder Rezeptschritts, wie z.B. vorgesehene Drehzahl des Werkzeugs, als Parameter für die Temperaturregelung.

Ein Parameter, der einen Zustand der Speise beschreibt, beinhaltet oder entspricht einem Wert, der mit dem Zustand der Speise korreliert. Ein Parameter, der einen Zustand der Küchenmaschine beschreibt, beinhaltet oder entspricht einem Wert, der mit dem Zustand der Küchenmaschine korreliert.

In einer Ausführungsform beschreibt der Parameter oder einer der mehreren Parameter eine Drehzahl des Werkzeugs. Bei einem Drehen des Werkzeugs kann schneller erhitzt werden, so dass durch die Drehzahl als Parameter die Zubereitungsdauer beispielsweise reduziert werden kann. In einer Ausgestaltung ist der Parameter der Drehzahl die Ist-Drehzahl oder die Soll-Drehzahl. Durch das schnelle Anlaufen des Werkzeugs entspricht die Ist-Drehzahl normalerweise ungefähr der Soll-Drehzahl. In einer Ausgestaltung beinhaltet der Parameter der Drehzahl einer geplanten Drehzahl zu einem definierten Zeitpunkt oder Abschnitt der durch ein Rezept oder einen Rezeptschritt vorgesehenen Speisenzubereitung.

In einer Ausführungsform beschreibt der Parameter oder einer der mehreren Parameter eine Viskosität der Speise in dem Speisenzubereitungsgefäß. Bei niedrigerer Viskosität kann schneller erhitzt werden, so dass durch die Viskosität als Parameter die Zubereitungsdauer beispielsweise reduziert werden kann. Ein Parameter, der die Viskosität beschreibt, beinhaltet oder entspricht einem Wert, der mit der Viskosität korreliert.

In einer Ausführungsform ist die Steuerungseinrichtung so konfiguriert, dass der Parameter oder die mehreren Parameter einen Einfluss auf eine Zeitdauer des Erhitzungsvorgangs bis zum Erreichen der Soll-Temperatur haben. Durch das Anpassen des Regelverhaltens an die Speise und/oder den Küchenmaschinenzustand, insbesondere Drehzahl des Werkzeugs, kann beispielsweise schneller mit höherer Heizleistung erhitzt werden, um die Speisenzubereitungszeit zu verkürzen, oder langsamer unter präziserer Einhaltung von Temperaturvorgaben zur Erzielung einer höheren Speisenqualität erhitzen werden.

In einer Ausführungsform ist die Steuerungseinrichtung so konfiguriert, dass der Parameter oder die mehreren Parameter einen Einfluss auf ein Überschwingverhalten und ein Begrenzen eines Überschwingens haben. Durch das Anpassen des Regelverhaltens an die Speise und/oder den Küchenmaschinenzustand, insbesondere Drehzahl des Werkzeugs, kann beispielsweise schneller mit höherer Heizleistung erhitzt werden, um unter Tolerierung eines größeren Überschwingverhaltens die Speisenzubereitungszeit zu verkürzen, oder langsamer mit reduziertem Überschwingverhalten oder gar keinem Überschwingen zum Erzielen einer höheren Speisenqualität erhitzen werden. Überschwingverhalten oder Überschwingen betrifft beim Erhitzen ein vorübergehendes Überschreiten der Soll-Temperatur durch die Ist-Temperatur. Insbesondere hat die Regelungsprozesseinheit einen maßgeblichen Einfluss auf das Regelverhalten einschließlich dem Überschwingverhalten, und/oder ob Überschwingen toleriert wird oder nicht. Ein Erhitzen von Milchreis kann auf diese Weise beispielsweise ohne ein Anbrennen realisiert und Schokolade beispielsweise ohne unerwünschte Kristallumwandungen erwärmt und zubereitet werden.

In einer Ausführungsform wird der Parameter oder mindestens ein Parameter der mehreren Parameter durch die Steuerungseinrichtung ermittelt. Der Speisenzubereitungsvorgang kann hierdurch mit geringem Aufwand optimiert werden. Die Steuerungseinrichtung dient dem Betreiben der Küchenmaschine. Die Steuerungseinrichtung verfügt über Informationen für die Steuerung der Funktionskomponenten der Küchenmaschine einschließlich dem Werkzeug zum Mischen und/oder Zerkleinern sowie dessen Elektromotor, und/oder dem Heizelement. Hieraus resultieren Informationen wie z.B. Drehzahl des Werkzeugs und Motorlast des Elektromotors, d.h., der aktuell benötigte und verbrauchte Strom durch den Elektromotors (zur Erzielung der Soll-Drehzahl). Die Steuerungseinrichtung verfügt über Informationen von mindestens einen Sensor, vorzugsweise von allen Sensoren der Küchenmaschine, einschließlich einem oder mehreren Gewichtssensoren. In einer Ausgestaltung wird die Soll-Drehzahl des Werkzeugs, das aktuelle Signal mindestens eines Gewichtssensors und/oder eine aktuelle Motorlast von der Steuerungseinrichtung als Parameter genutzt und hierzu ermittelt. In einer Ausgestaltung wird ein entsprechendes Sensorsignal logisch verarbeitet bereitgestellt oder mehrere Sensorsignale und/oder Informationen der Steuerungseinrichtung zur Ermittlung eines Parameters verarbeitet.

In einer Ausgestaltung wird der mindestens eine Parameter fortlaufend während des Erhitzungsvorgangs im Rahmen der Speisenzubereitung ermittelt, damit der Erhitzungsvorgang einer Speise in dem Speisenzubereitungsgefäß auf die vorgegebene Soll-Temperatur durch das Heizelement fortlaufend, also kontinuierlich, in Abhängigkeit von dem mindestens einen Parameter erfolgt.

In einer Ausgestaltung wird die Speise mithilfe von Sensordaten (z.B. Gewichtssensor, Ist-Temperatur und/oder Motorstrom vorzugsweise mit einer fortlaufenden Analyse der zeitlichen Verläufe) überwacht, um eine dynamische Anpassung des Erhitzungsvorgangs insbesondere durch ein entsprechend angepasstes Regelverhalten zu realisieren.

In einer Ausführungsform ist die Steuerungseinrichtung so konfiguriert, dass die Steuerungseinrichtung den Parameter oder mindestens einen Parameter der mehreren Parameter anhand eines Motorstrom des Elektromotors, eines zeitlichen Verlaufs des Motorstroms des Elektromotors und/oder eines zeitlichen Temperaturverlaufs ermittelt. Wenn beispielsweise bei der Zubereitung von Pudding die Viskosität plötzlich geringer wird, kann ermöglicht werden, dass das Regelverhalten für den Erhitzungsvorgang noch während des Erhitzungsvorgangs geändert und entsprechend angepasst wird, um z.B. das Risiko eines Anbrennens zu reduzieren. Insbesondere wird als Parameter die Viskosität oder eine Viskositätserhöhung der Speise (oder entsprechend dazu korrelierende Kennwerte) anhand des Motorstroms (bevorzugt einem zeitlichen Anstieg des Motorstroms) und/oder der Ist-Temperatur (bevorzugt einen insbesondere zeitgleichen Anstieg der Ist-Temperatur) ermittelt. Ein Beispiel wird in der Figurenbeschreibung illustriert.

In einer Ausführungsform ist die Steuerungseinrichtung so konfiguriert, dass mehrere, vordefinierte Erhitzungs-Modi zum Erzielen von unterschiedlich verlaufenden Erhitzungsvorgängen vorgesehen sind. Dies erlaubt ein Anpassen des Erhitzungsvorgangs mit geringem Aufwand, insbesondere mit besonders geringer Rechenkapazität.

In einer Ausführungsform ist die Steuerungseinrichtung so konfiguriert, dass in Abhängigkeit von dem Parameter oder den mehreren Parametern ein Erhitzungs-Modus der mehreren, vordefinierte Erhitzungs-Modi ausgewählt wird, so dass der Erhitzungsvorgang auf die Soll-Temperatur durch ein Ansteuern des Heizelements gemäß dem ausgewählten Erhitzungs-Modus erfolgt. Insbesondere wählt die Steuerungseinrichtung den Erhitzungs-Modus aus, vorzugsweise anhand von hinterlegten Daten, die einen Algorithmus für die Auswahl anhand des mindestens einen Parameters enthalten. Dies erlaubt ein Anpassen des Erhitzungsvorgangs mit geringem Aufwand an die Speise und/oder den aktuellen Kochprozess, insbesondere mit besonders geringer Rechenkapazität.

In einer Ausführungsform ist die Steuerungseinrichtung so konfiguriert, dass in Abhängigkeit von dem Parameter Zieltemperaturdifferenz, dem Parameter Speisenwärmekapazität und/oder dem Parameter Speisenanbrennneigung ein Erhitzungs-Modus der mehreren, vordefinierte Erhitzungs-Modi ausgewählt wird.

Dieser Ausführung liegt die Erkenntnis zugrunde, dass eine größere Speisenwärmekapazität der Speise, insbesondere die aktuelle Speisenwärmekapazität der Speise in dem Speisenzubereitungsgefäß, einen Erhitzungs-Modus mit einer größeren Wärmezufuhr (insbesondere pro Zeit, z.B. Leistung in Watt) zulässt, ohne die Speisenqualität zu reduzieren. Der Parameter Speisenwärmekapazität kann beispielsweise über das Rezept oder einen Rezeptschritt an die Steuerungseinrichtung übergeben oder durch die Steuerungseinrichtung beispielsweise durch einen Erhitzungsimpuls (durch das Heizelement) und entsprechende Reaktionsauswertung (mithilfe des Gewichtssensors und/oder Temperatursensors) ermittelt werden. Gleiches gilt für die Speisenanbrennneigung, die ein Kennwert zur Charakterisierung eines Wärmeübergangs auf die Speise ist. Der Wärmeübergang wird zur Ermittlung des Kennwerts insbesondere in Abhängigkeit von einer Durchmischung (bzw. Ausprägung einer Schichtbildung) und/oder einem Ausmaß einer natürlichen Konvektion der Speise beschrieben, wobei mit abnehmender Durchmischung bzw. geringerer Fähigkeit zur Konvektion ein Erhitzungs-Modus mit einer geringeren Wärmezufuhr (insbesondere pro Zeit, z.B. Leistung in Watt) auszuwählen ist, um die Speisenqualität nicht zu reduzieren. Der Parameter Speisenanbrennneigung kann ebenfalls vom Rezept oder Rezeptschritt an die Steuerungseinrichtung übergeben oder durch die Steuerungseinrichtung anhand einer Auswertung von Sensordaten und/oder aktueller Informationen der Steuerungseinrichtung ermittelt werden, z.B. durch eine Ermittlung der Viskosität oder Viskositätsänderung. Insbesondere ist ein Viskositätssensor zum Messen oder Erfassen der Viskosität vorgesehen. Der Parameter Zieltemperaturdifferenz kann beispielsweise die Differenz der Soll-Temperatur zur Ist-Temperatur zu Beginn eines Erhitzungsvorgangs sein. Allgemein kann das Ändern einer Soll-Temperatur durch den Benutzer, das Rezept oder einen Rezeptschritt den Beginn eines Erhitzungsvorgangs darstellen. Der Parameter Zieltemperaturdifferenz kann in einer Ausgestaltung kontinuierlich aus der Differenz der Soll-Temperatur zur aktuellen Ist-Temperatur ermittelt werden. Bei dem Parameter Zieltemperaturdifferenz gilt, dass eine größere Zieltemperaturdifferenz es erlaubt, dass ein Erhitzungs-Modus mit einer größeren Wärmezufuhr (insbesondere pro Zeit, z.B. Leistung in Watt) ausgewählt werden kann.

In einer Ausführungsform umfassen oder beinhalten die Erhitzungs-Modi eine oder mehrere Leistungsstufen, in denen jeweils eine unterschiedliche elektrische Versorgungsleistung oder Leistungsbegrenzung für das Heizelement definiert wird. Hierdurch wird nicht nur ein an die Speise und/oder den aktuellen Kochprozess angepasster Erhitzungsvorgang mit geringem Aufwand realisiert, sondern gleichzeitig hitzesensible Lebensmittel verbessert geschützt, weil eine automatische Begrenzung der Wärmeabgabe des Heizelements erfolgt. Dies hat im Übrigen den weiteren, zusätzlichen Vorteil, dass eine verbesserte Erhitzung auch während Sensor-Totzeiten erzielt werden kann. Eine Sensor-Totzeit resultiert aus der Trägheit eines Sensors, die zu Beginn einer Messung vorliegen kann, so dass zu Beginn eines Messens z.B. der Ist-Temperatur noch kein Sensorsignal oder ein verzögertes Sensorsignal für die Ist-Temperatur der Steuerungseinrichtung, insbesondere der Temperaturregelung, zur Verfügung steht. Insbesondere bei sehr niedrigen Soll-Temperaturen, die zu Anfang des Erhitzungsvorgangs nur eine geringe Abweichung zur Ist-Temperatur hat, erweist sich die Lösung dieser Ausführungsform als sehr zuverlässig und vorteilhaft.

In einer Ausgestaltung sind genau zwei Erhitzungs-Modi, besonders bevorzugt genau drei Erhitzungs-Modi vorgesehen. In einer Ausgestaltung werden nicht mehr als zehn unterschiedliche Erhitzungs-Modi vorgesehen. Genau drei Erhitzungs-Modi haben den besonderen Vorteil, dass Speisen entweder in sehr kurzer Zeit oder mit sehr hoher Qualität zubereitet werden können, ohne übermäßig Rechen- und Speicherkapazität für die Realisierung zu benötigen. In einer besonders bevorzugten Ausgestaltung sind ein erster Erhitzungs-Modus mit 20% bis 50% Leistungsbegrenzung oder ungefähr 150 W bis 400 W, ein zweiter Erhitzungs-Modus mit 60% bis 80% Leistungsbegrenzung oder ungefähr 500W bis 800 W und ein dritter Erhitzungs-Modus mit 90% bis 100% Leistungsbegrenzung oder ungefähr 900 W bis 1500 W vorgesehen. Insbesondere ist jeweils nur ein Wert für die Leistungsbegrenzung bzw. die Watt-Angaben innerhalb des angegebenen Bereichs fest in den hinterlegten Daten der Steuerungseinrichtung definiert.

Ein weiterer Aspekt betrifft ein Verfahren zum Zubereiten einer Speise in einem Speisenzubereitungsgefäß einer Küchenmaschine, die ein Heizelement zum Erhitzen einer Speise in dem Speisenzubereitungsgefäß und ein durch einen Elektromotor rotierbares Werkzeug zum Mischen und/oder Zerkleinern einer Speise in dem Speisenzubereitungsgefäß umfasst, um unter Zugriff auf ein elektronisch gespeichertes Rezept mit mehreren Rezeptschritten zum Betreiben des Werkzeugs und/oder des Heizelements in einer durch den jeweiligen Rezeptschritt definierten Weise eine Speise teilautomatisiert mit der Küchenmaschine zubereiten zu können. Das Verfahren umfasst die folgenden Schritte:
- Vorgeben einer Soll-Temperatur für das Erhitzen der Speise in dem Speisenzubereitungsgefäß durch ein Rezept, einen Rezeptschritt und/oder einen Benutzer, insbesondere an eine Steuerungseinrichtung, und/oder
- Vergleichen einer mithilfe eines Temperatursensors ermittelten Ist-Temperatur mit der Soll-Temperatur, insbesondere durch die weiter oben erwähnte Temperaturregelung der Steuerungseinrichtung, und/oder
- Durchführen eines Erhitzungsvorgangs der Speise in dem Speisenzubereitungsgefäß mithilfe des Heizelements auf die vorgegebene Soll-Temperatur in Abhängigkeit von einem oder mehreren Parametern zum Beschreiben eines Zustands der Speise oder der Küchenmaschine, insbesondere so dass ein Wärmeübergang in die Speise berücksichtigt werden kann. Insbesondere ist der Wärmeübergang in die Speise charakterisierbar durch eine Speisenanbrennneigung. Eine höhere Speisenqualität oder Zubereitungszeit können so erzielt werden. Insbesondere erfolgt der Vergleich der Ist-Temperatur mit der Soll-Temperatur auch während des Erhitzungsvorgangs und/oder kontinuierlich. Die Merkmale, Ausführungsformen und Wirkungen der eingangs beschriebenen Küchenmaschine beziehen sich entsprechend auch auf diesen Verfahrensaspekt.

Ein weiterer Aspekt betrifft ein Computerprogramm, also ein Computerprogrammprodukt, umfassend Befehle, die bei der Ausführung des Programms durch die Steuerungseinrichtung diese veranlassen, die Schritte des Verfahrens nach dem vorhergehenden Aspekt auszuführen. Die Merkmale, Ausführungsformen und Wirkungen der eingangs beschriebenen Küchenmaschine zur Lösung der Aufgabe beziehen sich entsprechend auch auf dieses Computerprogramm.

In einer Ausgestaltung umfasst die Steuerungseinrichtung einen Prozessor und einen Speicher. Auf dem Speicher ist üblicherweise das Programm, d.h., auf dem Speicher speicherbare Befehle bzw. ein Computer-Programm-Code hinterlegt. Hinterlegt meint allgemein auf dem Speicher gespeichert. Der Prozessor, der Speicher und der Computer-Programm-Code sind so konfiguriert, dass ein Verfahren mit mehreren Verfahrensschritten durchgeführt werden kann. Durch Verfahrensschritte kann beispielsweise ein Ermitteln oder Berechnen realisiert werden.

Nachfolgend werden Ausführungsbeispiele der Erfindung auch anhand von Figuren näher erläutert. Merkmale der Ausführungsbeispiele und weiterer nachfolgend beschriebener alternativer oder ergänzender Ausgestaltungen können einzeln oder in einer Mehrzahl mit den beanspruchten Gegenständen kombiniert werden. Die beanspruchten Schutzbereiche sind nicht auf die Ausführungsbeispiele beschränkt.

Es zeigen:
- Figur 1:: Schematische Frontansicht einer erfindungsgemäßen Küchenmaschine mit einem im Querschnitt gezeigten Speisenzubereitungsgefäß;
- Figur 2:: Schematisches Ablaufdiagramm für ein Erhitzen einer Speise auf eine Soll-Temperatur gemäß der vorliegenden Erfindung;
- Figur 3:: Schematische Illustration von mehreren Erhitzungs-Modi, die in Abhängigkeit von mehreren Parametern, die auf den Achsen aufgetragen sind, ausgewählt werden können, um eine Speise erfindungsgemäß auf eine Soll-Temperatur zu erhitzen; und
- Figur 4:: Diagramm mit zeitaufgelösten Kurven der Ist-Temperatur und des Motorstroms.

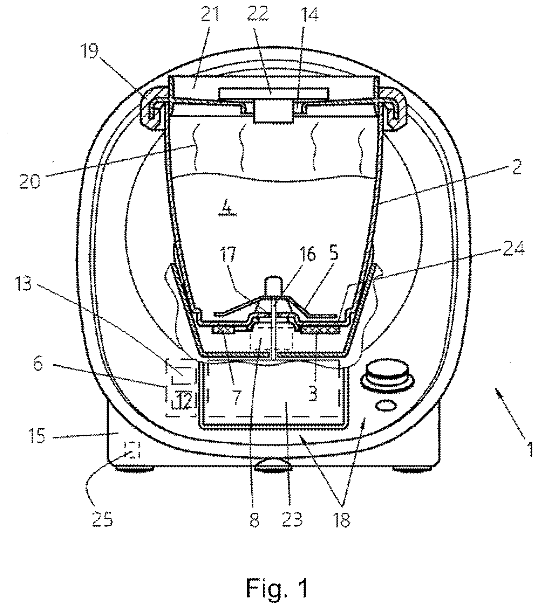

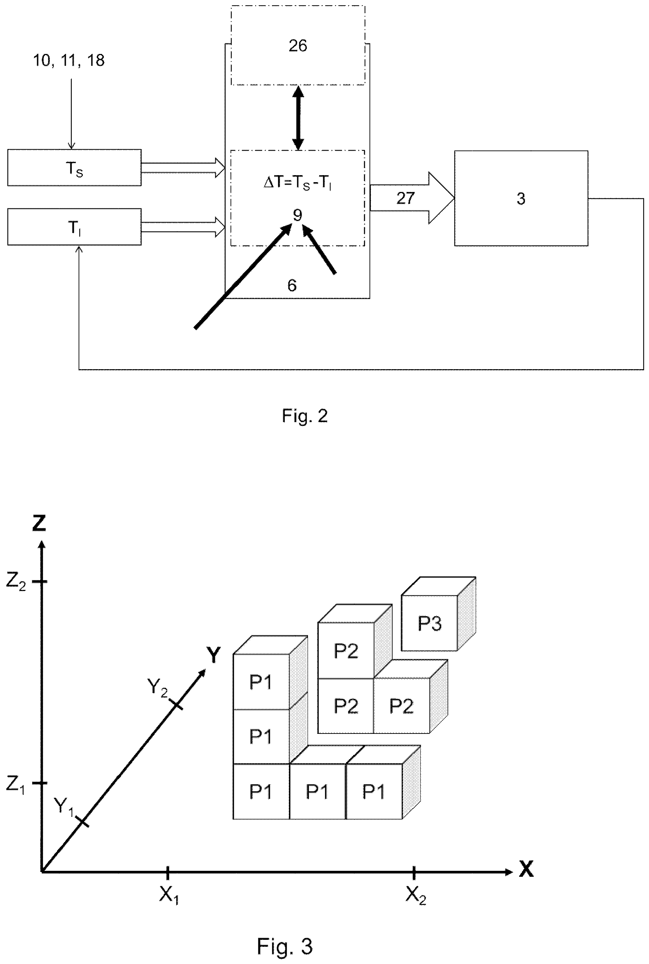

Die Figur 1 zeigt eine Küchenmaschine 1 mit einem Speisenzubereitungsgefäß 2, worin gerade eine Speise 4 zubereitet wird. Durch ein Heizelement 3 wird die Speise 4 erhitzt und die Temperatur der Speise 4 durch den Temperatursensor 13 gemessen, der eine Ist-Temperatur an eine Steuerungseinrichtung 6 übermittelt. Einem Werkzeug 5, insbesondere Mixmesser mit radial abstehenden Klingen, zum Mischen und/oder Zerkleinern der Speise 4 in dem Speisenzubereitungsgefäß 2 rotiert bevorzugt beim Erhitzen, um die Speise 4 zu durchmischen und einem Anbrennen der Speise 4 entgegenzuwirken. Über eine Antriebswelle 16, die sich durch eine Gefäßdurchführung 17 im Bodenbereich 24 zum Werkzeug 5 im Inneren des Speisenzubereitungsgefäßes 2 erstreckt, kann ein Elektromotor 8 das Werkzeug 5 antreiben. Ein erhöhter Widerstand durch die Speise 4 erhöht die Last auf den Elektromotor 8 und eine höhere Leistungsaufnahme, die zu einem höheren Motorstrom führt, der dem Elektromotor 8 zugeführt wird. Eine Steuerungseinrichtung 6 mit einem Prozessor 13 und einem Speicher 12 ist insbesondere im Gehäuse 15 integriert. Das Gehäuse 15 umfasst mindestens einen Gewichtssensor 25, bevorzugt einen Gewichtssensor 25 in allen Standfüßen. Eine Benutzerschnittstelle 18 ist am Gehäuse 15 vorgesehen, die ein Display umfasst, insbesondere Touchscreen-Display 23 mit Bildzeichen zum Betätigen durch den Benutzer. Die Benutzerschnittstelle 18 kann alternativ oder ergänzend einen manuellen Bedienschalter aufweisen, insbesondere einem Drehknopf. Insbesondere können über das Display Handlungsanweisungen an einen Benutzer gemäß eines Rezeptschrittes 11 eines Rezeptes 10 gegeben werden, auf die in Fig. 2 näher eingegangen werden. Eine Soll-Temperatur kann von dem Rezept 10, einem Rezeptschritt 11 des Rezepts vorgegebene und an die Steuerungseinrichtung 6 übergeben werden. Es ist auch möglich, dass die die Steuerungseinrichtung 6 eine vorgegebene Soll-Temperatur von einem Benutzer durch Betätigen der Benutzerschnittstelle 18, insbesondere mithilfe des Drehknopfes, erhält.

Ein Deckel 21, 22 deckt die offene Oberseite des Speisenzubereitungsgefäßes 2 ab und umfasst ein erstes Deckelelement 21 und ein zweites Deckelelement 22. Das scheibenförmige erste Deckelelement 21 liegt auf dem Speisenzubereitungsgefäß 2 auf und hat eine mittige Deckelöffnung 14 zum Einfügen von Lebensmitteln als Zutaten in das Speisenzubereitungsgefäß 2. Das separate zweite Deckelelement 22 dient dem Abdecken der Deckelöffnung 14 und erlaubt ein Austreten von Dampf 20, insbesondere durch ein Entweichen zwischen dem ersten Deckelelement 21 und dem zweite Deckelelement 22. Eine Verriegelungseinrichtung 19 fixiert das erste Deckelelement 21 am Speisenzubereitungsgefäß 2 und/oder das Speisenzubereitungsgefäß 2 am Gehäuse 15.

Die Steuerungseinrichtung 6 der Küchenmaschine 1 ist so konfiguriert ist, dass ein Erhitzungsvorgang einer Speise 4 in dem Speisenzubereitungsgefäß 2 durch das Heizelement 3 auf eine vorgegebene Soll-Temperatur in Abhängigkeit von einem oder mehreren Parametern 9 (vgl. Figuren 2 bis 4) zum Beschreiben eines Zustands der Speise 4 oder der Küchenmaschine 1 erfolgt, insbesondere so dass ein Wärmeübergang in die Speise berücksichtigt werden kann. Insbesondere ist der Wärmeübergang in die Speise charakterisierbar durch eine Speisenanbrennneigung.

Hierdurch können die nachfolgenden Vorteile erzielt werden. Ein Anbrennen kann vermieden werden (hohe Genauigkeit ohne Temperaturüberschwinger), die Heizleistung kann parameterabhängig erhöht werden (schnelleres Aufheizen und/oder parameterabhängiges Akzeptieren von Überschwingern, z.B. bei unkritischen Rezepten), Schnelleres und robusteres Einstellen von Regelungsmodellen durch die Einbeziehung fehlender Informationen in Form von Parametern 9, Verhindern von unerwünschten Stoffumwandlungen (z.B. Kristallisation in Schokolade), Sicherstellen der geforderten Rezept- und Geschmacksgüte, Ermöglichen eines Anpassens der gewünschten Geschmacksgüte durch den Benutzer über die Benutzerschnittstelle 18 (z.B. ein Lebensmittel bissfest oder weich kochen), Verhindern eines Bildens von unerwünschten Schadstoffen (z.B. Acrylamid), und/oder verbesserte Reproduzierbarkeit von Rezeptschritten, die einen Erhitzungsvorgang zum Garen eines Lebensmittels bzw. der Speise 4 beinhalten.

Die Figur 2 zeigt ein schematisches Ablaufdiagramm, bei dem eine Soll-Temperatur Ts für ein Erhitzen einer Speise 4 in dem Speisenzubereitungsgefäß 2 durch ein Rezept 10, einen Rezeptschritt 11 und/oder einen Benutzer vorgegeben und von der Steuerungseinrichtung empfangen wird. Eine Ist-Temperatur T_{I} wird von dem Temperatursensor 7 erfasst und der Steuerungseinrichtung für einen Vergleichen mit der Soll-Temperatur Ts übermittelt. Eine Temperatur-Abweichung ΔT=T_{S}-T_{I} wird gebildet. Der Steuerungseinrichtung liegt neben der Temperatur-Abweichung ΔT auch mindestens ein Parameter 9 um Beschreiben eines Zustands der Speise 4 oder der Küchenmaschine 1 vor, den die Steuerungseinrichtung 6 selbst anhand von Sensordaten oder Informationen aus dem Betrieb der Küchenmaschine ermittelt, empfängt, von einem Rezept 10 oder Rezeptschritt 11 übergeben bekommt oder über die Benutzerschnittstelle 16 via Eingabe durch den Benutzer erhält. Auf Basis der Temperatur-Abweichung ΔT und dem mindestens einen Parameter 9 - insbesondere auch auf Basis der vorgegebenen Soll-Temperatur Ts und/oder der aktuellen Ist-Temperatur T_{I} - ermittelt die Steuerungseinrichtung 6 anhand von hinterlegten Daten 26 eine Ausgangsgröße 27 zum Ansteuern des Heizelements 3. Die hinterlegten Daten 26 sind insbesondere in einer externen Cloud und/oder dem internen Speicher 12 gespeichert. Die Ausgangsgröße 27 kann ein Steuersignal für das Heizelement 3, eine elektrische Leistung (in Watt) zum Versorgen und Betreiben des Heizelement 3 und/oder eine Stromstärke (in Ampere) für die Stromversorgung des Heizelement 3 sein. Eine Wärmeabgabe oder Heizleistung des Heizelement 3 steigt vorzugsweise korrelierend oder proportional mit der versorgten, elektrischen Leistung (in Watt) oder Stromstärke (in Ampere). Insbesondere ist eine nicht dargestellte Temperaturregelung der Steuerungseinrichtung vorhanden, die aus den Eingangsdaten der Ist-Temperatur T_{I} und Soll-Temperatur Ts und/oder der Temperatur-Abweichung ΔT einerseits und dem mindestens einen Parameter 9 andererseits die Ausgangsgröße 27 bestimmt. Vorzugsweise dient hierfür eine Regelungsprozesseinheit, die aus der Temperatur-Abweichung ΔT und dem mindestens einen Parameter 9 die Ausgangsgröße 27 ermittelt und somit das Regelverhalten definiert. Der hierfür zugrunde liegenden Algorithmus, das Regelungsmodell und/oder ein zugrunde liegendes Kennfeld sind in den hinterlegten Daten 27 enthalten, auf die zur Ermittlung der Ausgangsgröße 27 zugegriffen werden.

Im Folgenden werden Ausführungsbeispiele bezüglich des Parameters 9 oder der mehreren Parameter beschrieben.

Ein Rezept 10 übermittelt der Steuerungseinrichtung 6 für die Temperaturregelung Parameter 9 wie zum Beispiel Viskosität, Wärmekapazität, Erhitzungsdauer und/oder eine maximale Temperaturobergrenzen. Diese Parameter 9 bewirken in der Temperaturregelung, wie schnell die Speise 4 aufgeheizt werden kann und wie gewissermaßen vorsichtig, d.h., präzise und/oder langsam, sich die Ist-Temperatur der Soll-Temperatur nähern soll. In einer Ausgestaltung kann der insbesondere vom Rezept 10 übermittelte mindestens eine Parameter 9 zusätzlich von der Steuerungseinrichtung 6 anhand von hinterlegten Daten 26 auf Plausibilität geprüft werden. Es soll erreicht werden, das empfindliche Lebensmittel möglichst ohne für die Speisenqualität schädliche Temperaturüberschwinger auf die Soll-Temperatur (Zieltemperatur) geregelt werden. Unempfindliche Rezepte erlauben dagegen ein Erhitzen der Speise 4 mit maximaler Geschwindigkeit (Leistung), wobei Temperaturüberschwinger akzeptabel sind und toleriert werden.

Ein Rezept 10 oder ein Rezeptschritt 11 (und/oder der Benutzer über die Benutzerschnittstelle 18) können in einer Ausgestaltung mindestens eine der nachfolgend - durch Semikolon getrennten, alternativen oder ergänzenden - Informationen bzw. Kennwerte an die Steuerungseinrichtung 6 übergeben, um mindestens einen Parameter 9 zu erhalten oder zu ermitteln, so dass in Abhängigkeit von dem mindestens einen Parameter 9 ein Erhitzungsvorgang der Speise 4 in dem Speisenzubereitungsgefäß 2 mithilfe des Heizelements 3 auf eine vorgegebene Soll-Temperatur Ts durchgeführt werden kann: spezifische Wärmekapazität cp (berechenbar mittels einer Formel aus Kohlenhydraten, Fetten und Wasser); Wassergehalt, Fettgehalt, Kohlenhydrate und/oder Wärmebehandlung des Lebensmittels, Viskosität bei Raumtemperatur; Wassergehalt, Fettgehalt, Kohlenhydrate und/oder Wärmebehandlung des Lebensmittels; Viskosität in Abhängigkeit der Temperatur und/oder der Zeit; Art des Werkzeugs, Drehzahlbedarf des Werkzeugs 5 in Abhängigkeit von der Temperatur und/oder Zeit; Wärmeleitung im Lebensmittel; Wassergehalt, Fettgehalt, Kohlenhydrate und/oder Wärmebehandlung des Lebensmittels; absolute obere Temperaturgrenze, die nicht überschritten werden darf (z.B. für die Zubereitung von Schokolade, Eier, stärkehaltige Lebensmittel + Fett, was zu Acrylamid, Rauchbildung von Ölen und Fetten führen kann); eine Klassifizierungsgröße der Anbrennneigung (z.B. sensitiv, normal, nicht sensitiv bzgl. Anbrennen, wobei "sensitiv" z.B. Risotto, Pudding, Milchreis beinhalten kann, wobei "normal" z.B. Anbratvorgänge von Fleisch und Gemüse beinhalten kann, und/oder wobei "nicht sensitiv" z.B. wasserhaltige Suppen beinhalten kann); Information, ob Stückgut (Gulasch) oder eine homogene Speise 4 vorliegt; Art / Vorhandensein des Werkzeugs; Verläufe der Soll-Temperatur bzw. Zieltemperatur (Schokolade) über Zeit und Viskosität; und/oder Schwell-Temperatur, ab der der Garprozess beginnt und/oder die Garzeit überwacht werden soll.

Die Küchenmaschine, ein Sensor der Küchenmaschine oder die Steuerungseinrichtung (und/oder der Benutzer) stellen in einer Ausgestaltung mindestens eine der folgenden - durch Semikolon getrennten, alternativen oder ergänzenden - Informationen bzw. Kennwerte bereit, damit die Steuerungseinrichtung 6 anhand dessen mindestens einen Parameter erhalten oder ermitteln kann, so dass in Abhängigkeit davon ein Erhitzungsvorgang der Speise 4 in dem Speisenzubereitungsgefäß 2 mithilfe des Heizelements 3 auf eine vorgegebene Soll-Temperatur Ts durchgeführt werden kann: Überprüfung der Viskosität insbesondere mithilfe eines Viskositätssensors und/oder Viskositätsänderung mittels Motorstrom (prozentuale Veränderung während der Speisenzubereitung insbesondere entlang eines Rezepts); Nutzung der Messdaten des mindestens einen Gewichtssensors 25 zum Ermitteln der absoluten Wärmekapazität; Temperaturverlauf und/oder Temperatursteigungen (über Energie oder Zeit) durch Temperaturmessungen an verschiedenen Punkten durch mindestens einen nicht dargestellten zusätzlichen Temperatursensor 7 (in einer Ausgestaltung mit unmittelbarem Kontakt zur Speise 4); und/oder Peakauswertung eines Temperatursensors 7 in einem Zeitintervall. Die Höhe eines Temperaturpeaks nach einem Energieimpuls (insbesondere abgegeben durch das Heizelement 3) gibt eine Information über die Wärmeabnahme, also durch Anregung und Reaktion.

Die Speisenanbrennneigung ist ein Kennwert zum Charakterisieren des Wärmeübergangs. Der Kennwert der Speisenanbrennneigung kann mindestens einer der folgenden Parameter sein oder mit mindestens einem der folgenden Parameter ermittelt werden: Viskosität; Wärmeleitung im Lebensmittel (z.B. als Übergabeparameter); Drehzahl des Werkzeugs; Art des Werkzeugs 5 zum Mischen und/oder Zerkleinern; Kennwert zur Beschreibung der Anbrennneigung; und/oder Stückgut oder homogenes Lebensmittel.

Die Speisenwärmekapazität ist ein Kennwert zum Charakterisieren der Wärmekapazität. Der Kennwert der Speisenwärmekapazität kann mindestens einer der folgenden Parameter sein oder mit mindestens einem der folgenden Parameter ermittelt werden: spezifische Wärmekapazität, Masse, und/oder absolute Wärmekapazität, d.h., spezifische Wärmekapazität x Masse. Beispielsweise ist Speisenwärmekapazität für Wasser größer als für Öl bei gleicher Masse.

Die Zieltemperaturdifferenz ist ein Kennwert zum Charakterisieren des Abstands zur Zieltemperatur bzw. Soll-Temperatur, insbesondere ausgehend von der Ist-Temperatur zum Zeitpunkt des Vorgebens der Soll-Temperatur zu Beginn des Erhitzungsvorgangs und/oder der Ist-Temperatur während des Erhitzungsvorgangs. Der Kennwert der Zieltemperaturdifferenz kann mindestens einer der folgenden Parameter sein oder mit mindestens einem der nachfolgenden - durch Semikolon getrennten - Parameter ermittelt werden: Differenz aus Soll-Temperatur und Ist-Temperatur; zeitlicher Verlauf der Zieltemperatur, insbesondere bei einer vorgegebenen zeitaufgelösten Soll-Temperatur-Kurve; eine feste Zieltemperatur, die der vorgegebenen Soll-Temperatur entspricht; und/oder eine absolute Temperatur-Obergrenze (vorgegeben oder anhand hinterlegter Daten basierend auf der vorgegebenen Soll-Temperatur und/oder mindestens einem Parameter ermittelt).

Die Figur 3 zeigt schematisch ein exemplarisches Kennfeld, das insbesondere in Form eines Algorithmus oder Lookup-Tables zum Auswählen eines Erhitzungs-Modus von mehreren Erhitzungs-Modi in den hinterlegten Daten 26 enthalten ist. Die Erhitzungs-Modi sind insbesondere in Form von Leistungsstufen P1, P2, P3 in den hinterlegten Daten definiert. Insbesondere können auch mehr als drei Leistungsstufen vorgesehen sein. Die Erhitzungs-Modi bzw. Leistungsstufen P1, P2, P3 beinhalten jeweils vorzugsweise eine unterschiedliche elektrische Versorgungsleistung (in Watt) oder Leistungsbegrenzung (z.B. in % der maximal möglichen Leistung) für das Heizelement 3. Insbesondere definiert eine erste Leistungsstufe P1 eine geringere Leistung (d.h., Versorgungsleistung oder Leistungsbegrenzung) als die zweite Leistungsstufe P2, die wiederum bevorzugt eine geringere Leistung als die dritte Leistungsstufe P3 definiert.

Im Folgenden wird die senkrechte Achse Z (Speisenanbrennneigung) näher erläutert. Ein Rezept 10 ist umso widerstandsfähiger gegen Anbrennen, je besser die Durchmischung und je geringer eine Schichtung im Bodenbereich 24 (Temperatur und Dichte) ist. Die Durchmischung ist umso besser, je besser die natürliche Konvektion d.h. je geringer die Viskosität (Widerstand gegen Fließen) des Rezeptes ist. Eine höhere Viskosität führt zu einem schlechten Wärmeübergang und zu einer höheren Temperaturschichtung im Bodenbereich 24. Beispielsweise hat Milchreis bei einer Drehzahl n=200 U/min des Werkzeugs 5 eine hohe Turbulenz und dadurch eine höhere Anbrennneigung (siehe Z₁), während Milchreis bei einer Drehzahl n=0 U/min eine niedrige Turbulenz und dadurch eine höhere Anbrennneigung hat (siehe Z₂).

Im Folgenden wird die waagerechte Achse X (Zieltemperaturdifferenz) näher erläutert: Je weiter die Zieltemperatur von der aktuellen Starttemperatur entfernt ist, desto stärker kann prinzipiell geheizt werden. Die vom Rezept gelieferte Zieltemperatur ist für das Rezept naturgemäß angemessen und führt nicht zum Anbrennen, von daher sind schnelle Temperaturanstiege bei weit entfernter Zieltemperatur unproblematisch. Je näher wir der Zieltemperatur kommen, desto weniger Leistung darf gegeben werden. Die waagerechte Achse beschreibt lediglich die normale Aufgabe der Temperaturregelung. Die Zieltemperatur wird durch das Rezept mitgeliefert. Beispielsweise ist die Zieltemperaturdifferenz zu Beginn eines Erhitzungsvorgangs für ein Erwärmen von Babynahrung ist geringer (siehe X₁) als zu Beginn eines Erhitzungsvorgangs zum Anbraten (siehe X₂), beides ausgehend von Raumtemperatur.

Im Folgenden wird die Tiefenachse Y (Speisenwärmekapazität) näher erläutert:
Je höher die absolute Wärmekapazität, desto mehr Energie ist bei gleicher geforderter Temperaturerhöhung notwendig. Anders herum bedeutet dies, dass bei einer großen absoluten Wärmekapazität viel Leistung gegeben werden kann, ohne dass es zu Temperaturüberschwingern kommen kann. Die absolute Wärmekapazität ergibt sich als Produkt aus spezifischer Wärmekapazität cp und der Masse m. Die mittlere spezifische Wärmekapazität kann von dem Rezept mitgeliefert bzw. an die Temperaturregelung übergeben werden. Die Masse wird bereits aus dem Rezept gefordert und kann ggfs. nochmals mit der Waage, die einen oder mehrere Gewichtssensoren umfasst, überprüft werden (Plausibilitätsprüfung). Beispielsweise haben 4 kg Wasser (siehe Y₂) eine höhere Wärmekapazität als 20 g Öl (siehe Y₁).

Aus den drei Achsen X, Y, Z ergibt sich ein Parameterraum, der als ein Kennfeld wiedergegeben und vorzugsweise in Form eines Lookup-Tables elektronisch gespeichert und auf diese Weise als Daten für die Steuerungseinrichtung hinterlegt werden kann.

Durch die Übergabe der Parameter 9 (z.B. aus dem Rezept 10 oder Rezeptschritten 11 insbesondere als Viskosität, gefordertes Drehwerkzeug, geforderte Drehzahl, spezifische Wärmekapazität, Masse, Information des Vorliegens von Stückgut oder eines homogenen Lebensmittels, absolute maximale Temperatur, Klassifizierung der Anbratneigung über Parameter einschließlich insbesondere sensitiv, normal und/oder nicht sensitiv bezüglich Anbrennen, Wärmeleitung im Lebensmittel, Zieltemperatur bzw. Soll-Temperatur, und/oder Temperatur, ab der der Garprozess beginnt und die Garzeit überwacht werden soll) an die Steuerungseinrichtung 6 kann ein Punkt oder ein Bereich in dem Parameterraum zugeordnet und ermittelt werden. Die Bestimmung des Punktes (oder Bereiches) im Parameterraum erfolgt vorzugsweise ganz zu Anfang, wenn das Rezept gestartet wird, immer beim Start eines Rezeptschrittes mit einem Aufheizvorgang, und/oder zu Anfang eines jeden Aufheizvorgangs. Die Überprüfung des Punktes (oder des Bereiches) im Parameterraum erfolgt in einer Ausgestaltung fortlaufend während des Erhitzungsvorgangs, insbesondere mithilfe von einem oder mehreren Regelungsalgorithmen (und/oder Regelungsmodellen).

Überprüft werden können die (z.B. von dem Rezept 10 oder Rezeptschritten 11 übergebenen) Parametern durch den Motorstrom (Viskosität), die Waagendaten (Masse, bestimmt mit mindestens einem Gewichtssensor) und die Temperaturmessung (Abstand zur Zieltemperatur). Je weiter der Parameterpunkt des Rezeptes rechts oben im Kennfeld ist, desto steiler und schneller kann die Aufheizkurve (durch Auswahl eines entsprechend hohen Erhitzungs-Modus, z.B. P3) ausfallen. Je weiter der Parameterpunkt links unten im Kennfeld (Ursprung) ist, desto präziser und langsamer ist die (durch Auswahl eines entsprechend niedrigen Erhitzungs-Modus, z.B. P1) umzusetzende Aufheizkurve. Dies ist insbesondere deshalb von Vorteil, da auch eine modellbasierte Regelung mit Identifikationsphase eine gewisse Zeit benötigt, um den aktuellen Ist-Zustand für die Auswahl eines geeigneten Erhitzungs-Modus zu identifizieren. Eine Einordnung in dem in Fig. 3 exemplarisch illustrierten Parameterraum kann somit Zeit sparen oder Überschwinger vermeiden, bevor eine Systemerkennung (Zuordnung des aktuellen Ist-Zustand insbesondere zu einem Erhitzungs-Modus oder zu einer Ausgangsgröße) das weitere Regelverhalten bestimmt.

Es können so z.B. drei oder mehr verschiedene Aufheizraten - beispielsweise leicht (z.B. P1), mittel (z.B. P2) und stark (z.B. P3) - definiert und in Abhängigkeit des Ortes des Rezeptes 10, des Rezeptschrittes 11 oder der aktuellen Speise 4 in dem Parameterraum ausgewählt werden. Die Aufheizrate kann dabei durch eine Leistungsbegrenzung, z.B. 30%, 70% und 100% von der Maximalleistung, definiert sein. Dies entspricht insbesondere ungefähr 540W (z.B. für P1), 1260W (z.B. für P2) und 1800W (z.B. für P3) oder beispielsweise 282W (z.B. für P1), 658W (z.B. für P2) und 940W (z.B. für P3). Dieser Ansatz der Leistungsbegrenzung funktioniert auch innerhalb einer Sensor-Totzeit (also von Anfang an, wenn der Sensor durch die Trägheit noch kein oder ein verzögertes Temperatursignal erhält). Damit ist der Ansatz der Leistungsbegrenzung insbesondere von Vorteil für sehr kleine Zieltemperaturen und empfindliche Lebensmittel wie beispielsweise Schokolade. Eine andere Ausgestaltung für eine Aufheizratendefinition ist die Steigungsbegrenzung der Temperatur mit der Zeit oder eine begrenzte maximale Differenz zwischen einem Hot-Spot (insbesondere ein Bereich mit hoher oder maximaler Temperatur, insbesondere erfasst durch einen zusätzlichen Temperatursensor in Form eines Hot-Spot-Sensors) und einem Cold-Spot (insbesondere ein Bereich mit niedriger oder minimaler Temperatur, insbesondere erfasst durch einen zusätzlichen Temperatursensor in Form eines Cold-Spot-Sensors). In einer Ausgestaltung ist ein Sensor zur Detektion des Hot-Spots und Cold-Spots vorgesehen. Alternativ oder ergänzend kann eine stufenlose Aufheizrate (in einer der oben genannten 3 Varianten) in Abhängigkeit der Parameter 9 im Parameterraum umgesetzt werden.

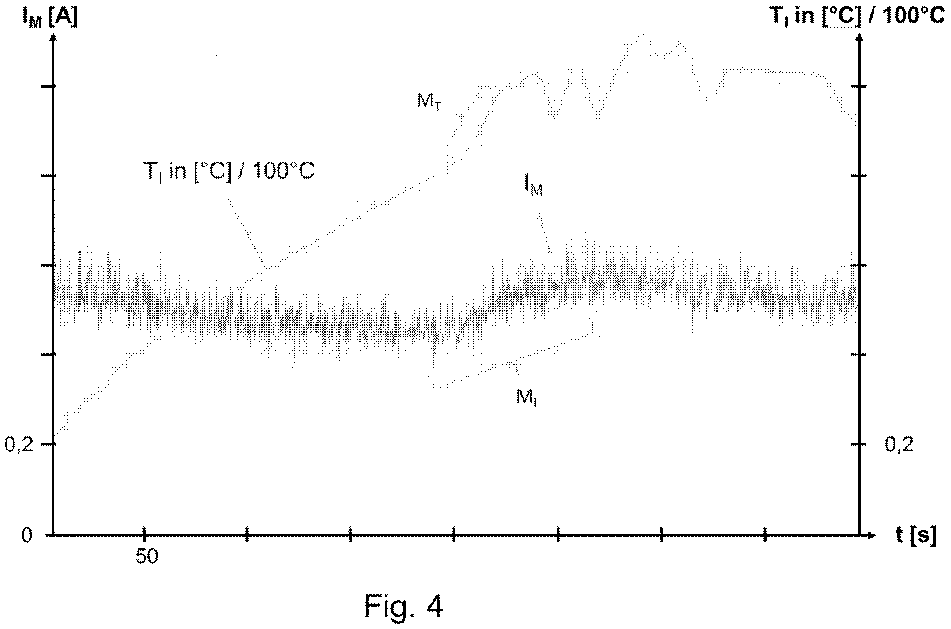

Hier kann zudem berücksichtigt werden, dass Viskositäten und Wärmekapazitäten temperaturabhängig sind oder sich durch chemische Umwandlungsprozesse im Lebensmittel stark und schlagartig verändern können (z. B. Denaturierung von Eiweißen oder die Reaktion von Stärke und Wasser, ähnlich wie im Beispiel der Figur 4). In einer Ausgestaltung wird daher diese mittleren Stoffeigenschaften im Rezept 10 oder Rezeptschritt 11 temperatur- und/oder zeitabhängig hinterlegen. Dies ermöglicht einen bedarfsgerechten und optimierten Erhitzungsvorgang beim teilautomatisierten Zubereiten einer Speise 4 unter Anleitung eines Rezepts 10.

Die Figur 4 zeigt zeitaufgelöste Kurven der Ist-Temperatur (T_{I}) und des Motorstroms (I_{M}) zur Ermittlung eines Kennwerts, der mit der Viskosität der Speise oder einer Viskositätsänderung korreliert. Der Motorstrom I_{M} in Ampere sowie die Ist-Temperatur T_{I} in °C normiert auf 100°C sind über die Zeit t in Sekunden aufgetragen. Die Messdaten stammen von einem Erhitzungsvorgang beim Zubereiten von Schokoladenpudding. Zu Erkennen ist ein anfangs im Wesentlichen linearer Anstieg der Temperatur T_{I}, während der Motorstrom sich mit einer starken Streuung des Signals seitwärts bewegt und dabei leicht abfällt. Im markierten Bereich M_{T} ist eine plötzliche Erhöhung der Steigung der Kurve erkennbar, was auf einem Wärmestau infolge einer Viskositätsänderung im Zuge der Verdickung der Konsistenz des Milchgemisches mit niedriger Viskosität zu dickflüssigem Puddings mit hoher Viskosität zurückzuführen ist. Auch der Motorstrom bildet die Viskositätserhöhung durch eine plötzliche Vergrößerung der Steigung der Kurve ab (siehe den markierten Bereich M_{I}). Diese Verdickung und Viskositätserhöhung tritt durch eine Reaktion von Stärke mit Wasser unter Temperatureinfluss auf.

Die Viskosität, die in einer Ausgestaltung als der Paramater 9 der Z-Achse für die Speisenanbrennneigung der Fig. 3 verwendet werden kann, ist eine lebensmittel- und rezeptspezifische Größe, welche Einfluss auf die Anfälligkeit für das Anbrennen hat. Das Rezept 10 kann die (temperaturabhängige) Viskosität als Übergabeparameter mitliefern. Eine Motorstrommessung kann alternativ die temperaturabhängige Viskosität messen und live Veränderungen in der Viskosität aufzeigen (siehe Fig. 4). Die Motorstrommessung ermöglichen es der Steuerungseinrichtung 6 daher, entweder selber die Viskositätskurven (gewissermaßen als ein sich zeitlich verändernder und kontinuierlich ermittelter Parameter 9) zu erzeugen oder die von dem Rezept 10 oder Rezeptschritt 11 übergebene Viskosität zu überprüfen (z.B. Plausibilitätsprüfung).

Die Durchmischung kann in einer Ausgestaltung ferner durch eine erzwungene Konvektion mittel Rühren verbessert werden. Die erzwungene Konvektion ist umso größer, je höher die Turbulenz im Medium ist. Die Turbulenz ist abhängig von der Geometrie des Werkzeugs 5 und von der Drehzahl. Dabei gilt, je höher die Drehzahl und je höher die Turbulenzen, desto besser ist die Durchmischung und desto geringer ist die Anfälligkeit gegen Anbrennen, folglich desto geringer Kennwert bzw. Parameter der Speisenanbrennneigung. Das aktuell eingesetzte Werkzeug 5 und die eingestellte Drehzahl sind also technische Kennwerte bzw. Parameter, welche zur Ermittlung der Speisenanbrennneigung (insbesondere als Parameter 9) genutzt werden können, weil sie Einfluss auf die Anfälligkeit für das Anbrennen haben und insbesondere von einem Rezept 10 oder Rezeptschritt 11 an die Steuerungseinrichtung 6 übergeben werden oder diese Werte einfordert.

Die Überprüfung der Position des Rezeptes im Parameterraum findet am Anfang eines jeden Heizvorgangs statt und wird fortlaufend (also kontinuierlich) durch die Steuerungseinrichtung 6 überwacht, um Veränderungen von Speisen- und Lebensmitteleigenschaften zu erkennen (siehe z.B. Figur 4 mit dem Anstieg der Viskosität). In Abhängigkeit der Position bzw. des Punktes oder Bereichs im Parameterraum kann dann eines der nachfolgenden Verfahren oder auch beide gleichzeitig ausgewählt und umgesetzt werden.

In einer Ausgestaltung erfolgt ein Anpassen der Erhitzungsrate und/oder Begrenzung der der Heizleistung in Abhängigkeit der Position, dem Punkt oder dem Bereich in dem Parameterraum. Insbesondere wird die Heizleistung begrenzen, z.B. auf 50% der Maximalleistung. Vorzugsweise wir als Parameter 9 eine maximal zulässige Temperaturdifferenz zwischen zwei örtlich getrennt voneinander angeordneten Temperatursensoren genutzt. Bevorzugt wird eine Steigung der Temperatur begrenzt (über Energie oder Zeit). Insbesondere erfolgt eine Begrenzung der maximalen Hot-Spot Temperatur.

In einer Ausgestaltung wird eine dynamische Anpassung des Aufheizverfahrens im Betrieb in Abhängigkeit der Position, dem Punkt oder dem Bereich in dem Parameterraum realisiert. Insbesondere kann als Auslöser (Trigger) eine Viskositätsänderung (wie z.B. in Fig. 4 illustriert) genutzt werden, insbesondere im Rahmen einer entsprechenden Überwachung. Vorzugsweise erfolgt eine dynamische Anpassung von Reglerparametern (der Regelungsprozesseinheit), bevorzugt durch eine Parametrisierung zum Vermeiden von Überschwingern (z.B. durch Anpassen von Verstärkungsfaktoren als Reglerparameter). Insbesondere erfolgt eine Regelung nur auf den Hot-Spot-Sensor für empfindliche Lebensmittel oder Speisen, so dass insbesondere die Lebensmitteltemperatur stets darunter liegt, z.B. unter der Hot-Spot-Temperatur. In einer Ausgestaltung wird die Drehzahl des Werkzeugs 5 angepasst, um einen Mischprozess zu verbessern und einem Anbrennen entgegenzuwirken.

Durch die offenbarte Lösung kann folgendes erzielt werden, dass Anbrennen vermieden werden kann (z.B. durch hohe Regelungs-Genauigkeit ohne Überschwinger, dass die Leistung beim Erhitzen erhöht werden kann, insbesondere durch schnelleres Heizen mit Akzeptieren von teilweisen Überschwingern bei unkritischen Rezepten, dass ein schnelleres und robusteres Einstellen des Regelungsmodells ermöglicht werden kann, insbesondere durch die Einbeziehung normalerweise fehlender Informationen, dass negative Stoffumwandlungen verhindert werden können, z.B. Kristallisation in Schokolade, dass ein Erzielen einer geforderten Rezept- und Geschmacksgüte sichergestellt und die Geschmacksgüte durch den Benutzer angepasst werden kann, dass ein Rezeptergebnis in Form einer mit der Küchenmaschine 1 zubereiteten Speise 4 gemäß der Benutzervorgaben variiert (bissfest vs. weich) werden und über Zeit oder Zieltemperatur gesteuert werden kann, dass eine Bildung von unerwünschten Stoffen wie z.B. Acrylamid vermieden wird, und/oder dass eine verbesserte Reproduzierbarkeit von Garschritten erreicht wird.

Es wird kein Regler ausgelegt, der für alles Anwendungsfälle passen soll, sondern die Anwendungsfälle bestimmen die Reglereigenschaften der Regelungsprozesseinheit. Die Logik ist also gewissermaßen umgedreht oder invertiert.

### Bezugszeichenliste

- 1: Küchenmaschine
- 2: Speisenzubereitungsgefäß
- 3: Heizelement
- 4: Speise
- 5: Werkzeug
- 6: Steuerungseinrichtung
- 7: Temperatursensor
- 8: Elektromotor
- 9: Parameter
- 10: Rezept
- 11: Rezeptschritt
- 12: Speicher
- 13: Prozessor
- 14: Deckelöffnung
- 15: Gehäuse
- 16: Antriebswelle
- 17: Gefäßdurchführung
- 18: Benutzerschnittstelle
- 19: Verriegelungseinrichtung
- 20: Dampf
- 21: erstes Deckelelement
- 22: zweites Deckelelement
- 23: Touchscreen-Display
- 24: Bodenbereich
- 25: Gewichtssensor
- 26: Hinterlegte Daten
- 27: Ausgangsgröße

## Patentansprüche

1. Küchenmaschine (1) mit einem Speisenzubereitungsgefäß (2), einem Heizelement (3) zum Erhitzen einer Speise (4) in dem Speisenzubereitungsgefäß (2), einem Werkzeug (5) zum Mischen und/oder Zerkleinern einer Speise (4) in dem Speisenzubereitungsgefäß (2) und einem Elektromotor (8) zum Rotieren des Werkzeugs (5), wobei eine Steuerungseinrichtung (6) der Küchenmaschine (1) vorgesehen ist, die Zugriff auf ein elektronisch gespeichertes Rezept (10) mit mehreren Rezeptschritten (11) für ein teilautomatisiertes Zubereiten einer Speise mit der Küchenmaschine (1) hat, so dass die Steuerungseinrichtung (6) durch einen Rezeptschritt (11) der mehreren Rezeptschritte (11) des Rezeptes (10) veranlasst werden kann, das Werkzeug (5) und/oder das Heizelement (3) in einer durch den Rezeptschritt (11) definierten Weise zu betreiben, wobei die Küchenmaschine (1) ein Vorgeben einer Soll-Temperatur (Ts) für das Erhitzen der Speise (4) in dem Speisenzubereitungsgefäß (2) durch ein Rezept (10), einen Rezeptschritt (11) und/oder einen Benutzer erlaubt, wobei die Küchenmaschine (1) ferner einen Temperatursensor (7) zum Ermitteln einer Ist-Temperatur (T_{I}) für ein Vergleichen mit der Soll-Temperatur (Ts) umfasst, **dadurch gekennzeichnet, dass** die Steuerungseinrichtung (6) so konfiguriert ist, dass ein Erhitzungsvorgang einer Speise (4) in dem Speisenzubereitungsgefäß (2) durch das Heizelement (3) auf die vorgegebene Soll-Temperatur (Ts) in Abhängigkeit von einem oder mehreren Parametern (9) zum Beschreiben eines Zustands der Speise (4) oder der Küchenmaschine (1) erfolgt, so dass ein Wärmeübergang in die Speise, charakterisierbar durch eine Speisenanbrennneigung, berücksichtigt werden kann.

2. Küchenmaschine (1) nach Anspruch 1, **dadurch gekennzeichnet, dass** der Parameter (9) oder mindestens ein Parameter (9) der mehreren Parameter (9) durch ein Rezept (10) oder einen Rezeptschritt (11) der mehreren Rezeptschritte (11) vorgegeben werden.

3. Küchenmaschine (1) nach einem der vorhergehenden Ansprüche, **dadurch gekennzeichnet, dass** der Parameter (9) oder einer der mehreren Parameter (9) eine Drehzahl des Werkzeugs (5) und/oder eine Art des Werkzeuges beschreibt.

4. Küchenmaschine (1) nach einem der vorhergehenden Ansprüche, **dadurch gekennzeichnet, dass** der Parameter (9) oder einer der mehreren Parameter (9) eine Viskosität der Speise in dem Speisenzubereitungsgefäß (2) beschreibt.

5. Küchenmaschine (1) nach einem der vorhergehenden Ansprüche, **dadurch gekennzeichnet, dass** die Steuerungseinrichtung (6) so konfiguriert ist, dass der Parameter (9) oder die mehreren Parameter (9) einen Einfluss auf eine Zeitdauer des Erhitzungsvorgangs bis zum Erreichen der Soll-Temperatur (Ts) haben.

6. Küchenmaschine (1) nach einem der vorhergehenden Ansprüche, **dadurch gekennzeichnet, dass** die Steuerungseinrichtung (6) so konfiguriert ist, dass der Parameter (9) oder die mehreren Parameter (9) einen Einfluss auf ein Überschwingverhalten und ein Begrenzen eines Überschwingens haben.

7. Küchenmaschine (1) nach einem der vorhergehenden Ansprüche, **dadurch gekennzeichnet, dass** der Parameter (9) oder mindestens ein Parameter (9) der mehreren Parameter (9) durch die Steuerungseinrichtung (6) ermittelt wird.

8. Küchenmaschine (1) nach dem vorhergehenden Anspruch, **dadurch gekennzeichnet, dass** die Steuerungseinrichtung (6) so konfiguriert ist, dass die Steuerungseinrichtung (6) den Parameter (9) oder mindestens einen Parameter (9) der mehreren Parameter (9) anhand eines Motorstrom des Elektromotors (8) oder eines zeitlichen Verlaufs des Motorstroms des Elektromotors (8) ermittelt.

9. Küchenmaschine (1) nach einem der zwei vorhergehenden Ansprüche, **dadurch gekennzeichnet, dass** die Steuerungseinrichtung (6) so konfiguriert ist, dass die Steuerungseinrichtung (6) den Parameter (9) oder mindestens einen Parameter (9) der mehreren Parameter (9) anhand eines zeitlichen Temperaturverlaufs ermittelt.

10. Küchenmaschine (1) nach einem der vorhergehenden Ansprüche, **dadurch gekennzeichnet, dass** die Steuerungseinrichtung (6) so konfiguriert ist, dass mehrere, vordefinierte Erhitzungs-Modi zum Erzielen von unterschiedlich verlaufenden Erhitzungsvorgängen vorgesehen sind.

11. Küchenmaschine (1) nach dem vorhergehenden Anspruch, **dadurch gekennzeichnet, dass** die Steuerungseinrichtung (6) so konfiguriert ist, dass in Abhängigkeit von dem Parameter (9) oder den mehreren Parametern (9) ein Erhitzungs-Modus der mehreren, vordefinierte Erhitzungs-Modi ausgewählt wird, so dass der Erhitzungsvorgang auf die Soll-Temperatur (Ts) durch ein Ansteuern des Heizelements (3) gemäß dem ausgewählten Erhitzungs-Modus erfolgt.

12. Küchenmaschine (1) nach dem vorhergehenden Anspruch, **dadurch gekennzeichnet, dass** die Steuerungseinrichtung (6) so konfiguriert ist, dass in Abhängigkeit von mindestens einem oder allen der Parameter (9) Zieltemperaturdifferenz, Speisenwärmekapazität und Speisenanbrennneigung ein Erhitzungs-Modus der mehreren, vordefinierte Erhitzungs-Modi ausgewählt wird.

13. Küchenmaschine (1) nach einem der drei vorhergehenden Ansprüche, **dadurch gekennzeichnet, dass** die Erhitzungs-Modi ein oder mehrere Leistungsstufen (P1, P2, P3) umfassen in denen jeweils eine unterschiedliche elektrische Versorgungsleistung oder Leistungsbegrenzung für das Heizelement (3) definiert wird.

14. Verfahren zum Zubereiten einer Speise (4) in einem Speisenzubereitungsgefäß (2) einer Küchenmaschine (1), die ein Heizelement (3) zum Erhitzen einer Speise (4) in dem Speisenzubereitungsgefäß (2) und ein durch einen Elektromotor (8) rotierbares Werkzeug (5) zum Mischen und/oder Zerkleinern einer Speise (4) in dem Speisenzubereitungsgefäß (2) umfasst, um unter Zugriff auf ein elektronisch gespeichertes Rezept (10) mit mehreren Rezeptschritten (11) zum Betreiben des Werkzeugs (5) und/oder des Heizelements (3) in einer durch den jeweiligen Rezeptschritt (11) definierten Weise eine Speise (4) teilautomatisiert mit der Küchenmaschine (1) zubereiten zu können, wobei das Verfahren die folgenden Schritte umfasst:
- Vorgeben einer Soll-Temperatur (Ts) für das Erhitzen der Speise (4) in dem Speisenzubereitungsgefäß (2) durch ein Rezept (10), einen Rezeptschritt (11) und/oder einen Benutzer,
- Vergleichen einer mithilfe eines Temperatursensors (7) ermittelten Ist-Temperatur (T_{I}) mit der Soll-Temperatur (T_{S}),
- Durchführen eines Erhitzungsvorgangs der Speise (4) in dem Speisenzubereitungsgefäß (2) mithilfe des Heizelements (3) auf die vorgegebene Soll-Temperatur (Ts) in Abhängigkeit von einem oder mehreren Parametern (9) zum Beschreiben eines Zustands der Speise (4) oder der Küchenmaschine (1), so dass ein Wärmeübergang in die Speise, charakterisierbar durch eine Speisenanbrennneigung, berücksichtigt werden kann.

15. Computerprogramm, umfassend Befehle, die bei der Ausführung des Programms durch eine Steuerungseinrichtung (6) diese veranlassen, die Schritte des Verfahrens nach dem vorhergehenden Anspruch auszuführen.
